# EUROPEAN PATENT APPLICATION

(11) **EP 2 197 070 A1**
(43) Date of publication of application: **16.06.2010**
(21) Application number: 08790685.5
(22) Date of filing: 27.06.2008
(51) Int. Cl.: H01M 10/40, H01M 4/02

(54) **LITHIUM SECONDARY BATTERY**

(30) Priority: 28.09.2007 JP 2007253218
(71) Applicant: Mitsubishi Heavy Industries, Ltd., Tokyo 108-8215 (JP); Kyushu Electric Power Co., Inc., Fukuoka-ken 810-8720 (JP)
(72) Inventor: IMASAKA, Koji, Nagasaki-shi Nagasaki 851-0392 (JP); TAJIMA, Hidehiko, Nagasaki-shi Nagasaki 851-0392 (JP); ADACHI, Kazuyuki, Fukuoka-shi Fukuoka 815-0032 (JP); WADA, Yoshihiro, Fukuoka-shi Fukuoka 815-0032 (JP); MATSUNAGA, Yoshinori, Nagasaki-shi Nagasaki 851-0392 (JP)
(74) Representative: Intes, Didier Gérard André
(86) International application number: PCT/JP2008/061720
(87) International publication number: WO 2009/041136

(57) **Abstract**

Provided is a lithium secondary battery that is capable of preventing thermal runaway inside the battery due to a short circuit. Included are cathodes (3) having cathode active material that stores and discharges lithium ions, anodes (4) that store and discharge lithium ions, and a dummy laminated body (9) in which dummy cathodes (6) connected to a cathode terminal and dummy anodes (7) connected to an anode terminal are alternately laminated and that has short circuit separators (8) for insulating the dummy cathodes (6) and the dummy anodes (7); and the dummy laminated body (9)is laminated on the outside of the alternately laminated cathodes (3) and anodes (4).

## Description

### Technical Field

The present invention relates to a lithium secondary battery suitable for use in a power storage apparatus, a movable-object power supply system, a natural-energy hybrid system and the like.

### Background Art

In response to a rising awareness on energy/environmental issues in recent years, power storage apparatuses, movable-object power supply systems, natural-energy hybrid systems and the like have received much attention as technical solutions. Among these, a large lithium secondary battery, which is a storage battery, is considered promising.

Lithium secondary batteries have advantages in comparison to other secondary batteries such as lead-acid batteries, nickel hydrogen batteries, etc. in that they have a greater energy density, better output characteristics, a longer lifetime and so forth. However, there are safety issues with lithium secondary batteries since rupture and ignition may result from thermal runaway of batteries caused by overcharging, internal short circuiting of cells, or the like.

As a solution to the problems described above, a technology for preventing an internal short circuit has been proposed in which a heat-resistant separator is employed inside a lithium secondary battery (for example, refer to Patent Document 1).
Patent Document 1: Japanese Unexamined Patent Application, Publication No. Hei 07-192753.

### Disclosure of Invention

However, in general, when internal short circuiting of a battery is caused by a foreign object (for example, a nail) driven in from outside, Joule heating occurs around the short circuited portion. Consequently, a separator insulating the cathode and the anode may melt or become carbonized depending on the amount of heat. If the separator melts or becomes carbonized, the short circuited area between the cathode and the anode increases, and it is possible that thermal runaway occurs in the battery within a short period of time.
Accordingly, there is a problem in that it is difficult, even with the use of a heat-resistant separator, to prevent an increase in the area of a short circuited site, to improve safety, etc., depending on the level of Joule heating.

A short circuit due to a foreign object, as described above, has a high probability of occurrence in a battery installed in a movable-object in such a case as a collision accident. With a stationary battery, on the other hand, a short circuit may occur therein when a foreign object falls on the battery due to an earthquake or the like and is driven into the battery; therefore, taking a preventive measure is also necessary.
The above-described problem is highly likely to become more serious particularly in the case of a large battery, because a greater amount of heat is generated by a short circuit.

The present invention has been conceived to solve the problem described above, and an object thereof is to provide a lithium secondary battery that is capable of suppressing internal short circuiting of a cell due to thermal runaway.

In order to achieve the above-described object, the present invention provides the following solutions.
The present invention provides a lithium secondary battery including cathodes having cathode active material that stores and discharges lithium ions, anodes that store and discharge lithium ions, and a dummy laminated body in which dummy cathodes connected to a cathode terminal and dummy anodes connected to an anode terminal are alternately laminated and that has an insulator to insulate the dummy cathodes and the dummy anodes, wherein the dummy laminated body is laminated on the outside of the alternately laminated cathodes and anodes.

According to the present invention, when a foreign object is driven into the lithium secondary battery, the foreign object is first driven into the dummy laminated body. The dummy cathodes and the dummy anodes are short circuited via the foreign object driven into them. When the short circuit resistance is small, a large current flows between the dummy cathodes and the dummy anodes, resulting in heat generation by the current. Because the dummy laminated body is laminated on the outside of the alternately laminated cathodes and anodes, the generated heat is dissipated outside without accumulating in the alternately laminated cathodes and anodes.
Accordingly, breakdown of crystals of the cathode active material in the cathodes by the heat generated at the time of a short circuit is suppressed, and thereby thermal runaway in the lithium secondary battery is suppressed or alleviated.

Furthermore, the dummy cathodes and the dummy anodes short circuit, causing a large current to flow, before the cathodes and the anodes short circuit via the foreign object; therefore, the value of the short circuit current that flows in the cathodes and the anodes when the cathodes and the anodes short circuit becomes small. Accordingly, the amount of heat generated in the cathodes and the anodes by the short circuit is reduced, and thereby thermal runaway of the battery can be suppressed or alleviated.

In the above-described invention, it is preferable that a part of the dummy laminated body be folded, and the folded dummy laminated body be disposed adjacent to one surface that is substantially perpendicular to the laminating direction of the cathodes and the anodes and another surface that is adjacent to the one surface.

By doing so, compared with the case in which the dummy laminated body is disposed only on the one surface substantially perpendicular to the laminating direction of the cathodes and the anodes, thermal runaway in the lithium secondary battery is suppressed even if a foreign object is driven in from the other surface because the dummy laminated body is also disposed on the other surface adjacent to the one surface.
Here, the other surface adjacent to the one surface may be, for example, the side surface or the bottom surface of the laminated body where the cathodes and the anodes are laminated.

In the above-described invention, it is preferable that thermal insulators for blocking the transmission of heat are provided between the dummy laminated body and the laminated cathodes and anodes.

By providing the thermal insulator in this way, the heat generated by short circuiting of the dummy cathodes and the dummy anodes is less easily transmitted to the laminated cathodes and anodes. Accordingly, breakdown of crystals of the cathode active material in the cathodes by the heat generated at the time of the short circuit is suppressed or alleviated, and thereby thermal runaway in the lithium secondary battery is suppressed.

In the above-described invention, it is preferable that heat sink portions for absorbing heat be provided between the dummy laminated body and the laminated cathodes and anodes.

By doing so, the heat generated by short circuiting of the dummy cathodes and the dummy anodes is absorbed by the heat sink portions and is less easily transmitted to the laminated cathodes and anodes. Accordingly, breakdown of crystals of the cathode active material in the cathodes by the heat generated at the time of the short circuit is suppressed or alleviated, and thereby thermal runaway in the lithium secondary battery is suppressed.

According to the lithium secondary battery of the present invention, an advantage is afforded in that, because the heat generated at the time of short circuiting of the dummy laminated body is dissipated to the outside, breakdown of crystals of the cathode active material in the cathodes is suppressed or alleviated, and thereby thermal runaway in the lithium secondary battery is suppressed.
An advantage is afforded in that, because the dummy cathodes and the dummy anodes short circuit, causing a large current to flow before the cathodes and the anodes short circuit via the foreign object, breakdown of crystals of the cathode active material in the cathodes is suppressed or alleviated, and thereby thermal runaway in the lithium secondary battery is suppressed.

### Brief Description of Drawings

[Fig. 1] Fig. 1 is a schematic diagram for explaining the configuration of a lithium secondary battery of a first embodiment of the present invention.
[Fig. 2] Fig. 2 is a schematic diagram for explaining the configuration of short circuit sheet assemblies in the lithium secondary battery of Fig. 1.
[Fig. 3] Fig. 3 is a schematic diagram for explaining the configuration of another example of the lithium secondary battery in Fig. 2.
[Fig. 4] Fig. 4 is a schematic diagram for explaining the shape of cathode sheets in Fig. 2.
[Fig. 5] Fig. 5 is a schematic diagram for explaining the shapes of anode sheets and short circuit separators in Fig. 2.
[Fig. 6] Fig. 6 is a top view for explaining an example of another arrangement of the short circuit sheet assemblies in Fig. 2.
[Fig. 7] Fig. 7 is a schematic diagram for explaining a state in which a nail is driven into the lithium secondary battery in Fig. 2.
[Fig. 8] Fig. 8 is a schematic diagram for explaining the configuration of a lithium secondary battery according to a second embodiment of the present invention.
[Fig. 9] Fig. 9 is a schematic diagram for explaining the configuration of a lithium secondary battery according to a third embodiment of the present invention.
[Fig. 10] Fig. 10 is a graph showing changes in temperature of gas ejected from a safety valve.
[Fig. 11] Fig. 11 is a graph showing changes in voltage.

### Explanation of Reference Signs

- 1A,1B, 1C:: lithium secondary battery
- 3:: cathode
- 4:: anode
- 6:: cathode sheet (dummy cathode)
- 7:: anode sheet (dummy anode)
- 8:: short circuit separator (separator)
- 9:: short circuit sheet assembly (dummy laminate body)
- 21:: nail (foreign object)
- 31:: thermal insulator

### Best Mode for Carrying Out the Invention

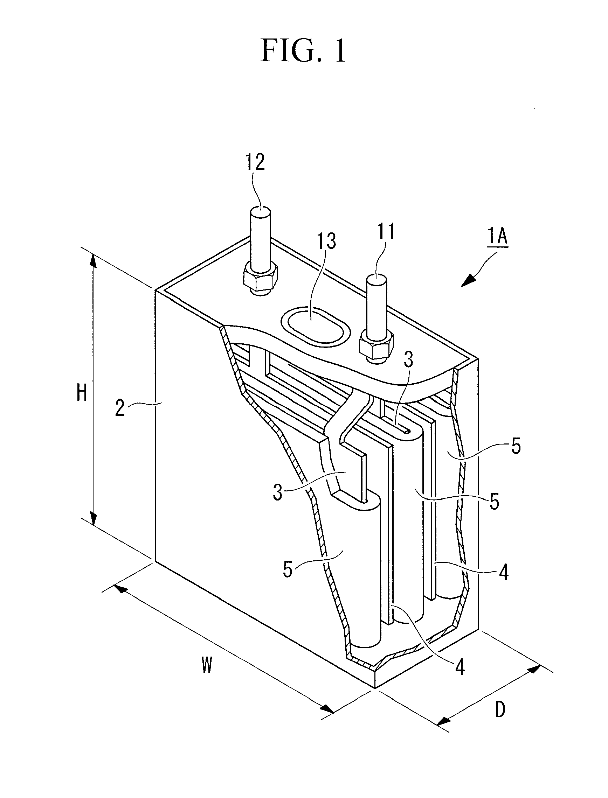

A lithium secondary battery according to an embodiment of the present invention will be described referring to Figs. 1 to 7; however, the present invention is not limited in any way to the embodiments below, and various modifications can be made without departing from the spirit of the present invention.

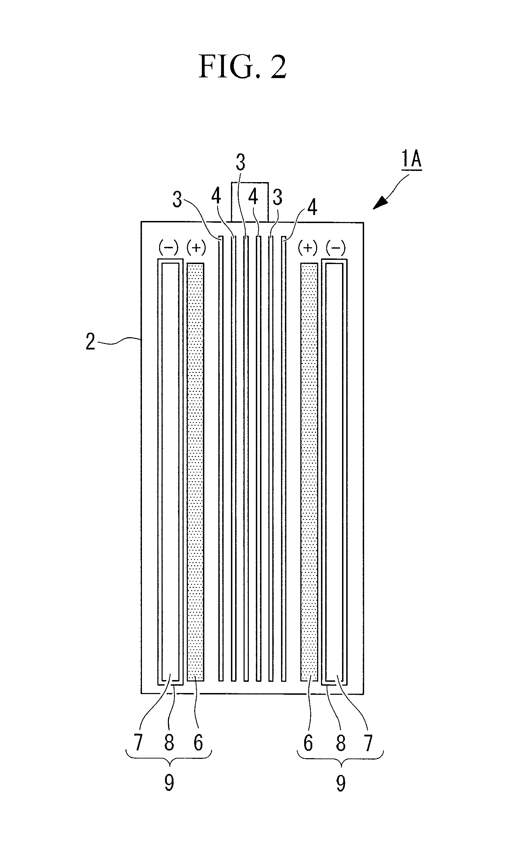

Fig. 1 is a schematic diagram for explaining the configuration of a lithium secondary battery of this embodiment, and Fig. 2 is a schematic diagram of short circuit sheet assemblies of the lithium secondary battery in Fig. 1.

As shown in Figs. 1 and 2, the lithium secondary battery 1A is provided with a container 2, cathodes 3 that are connected to a cathode terminal 11, anodes 4 that are connected to an anode terminal 12, separators 5 that insulate the cathodes 3 and the anodes 4, and short circuit sheet assemblies (dummy laminate body) 9 composed of cathode sheets (dummy cathodes) 6, anode sheets (dummy anodes) 7, and short circuit separators (separators) 8.
In this embodiment, the lithium secondary battery 1A will be described as applied to an example whose height (H) is 166.5 mm, whose width (W) is 110 mm, and whose depth (D) is 38 mm.

The container 2 contains therein the cathodes 3, the anodes 4, the separators 5, the short circuit sheet assemblies 9, and electrolyte solution (not shown).
The container 2 is provided with the cathode terminal 11 that connects to the cathodes 3 and the cathode sheets 6, the anode terminal 12 that connects to the anodes 4 and the anode sheets 7, and a safety valve 13 for releasing pressure to outside the container 2 when the internal pressure of the container 2 increases.

As the electrolyte solution, normally, known electrolytes for the lithium secondary battery 1A can be used; for example, one of the following can be used: ethylene carbonate, propylene carbonate, butylene carbonate, γ-butyrolactone, γ-valerolactone, acetonitrile, sulfolane, 3-methylsulfolane, dimethyl sulfoxide, N,N-dimethylformamide, N-methyloxazolidinone, N,N-dimethylacetamide, dimethyl carbonate, diethyl carbonate, ethyl methyl carbonate, dimethoxymethane, 1,2-dimethoxyethane, tetrahydrofuran, 2-methyltetrahydrofuran, 1,3-dioxolane, 4-methyl-1,3-dioxolane, methyl formate, methyl acetate, or methyl propionate; or alternatively, a mixed solvent of two or more of the above, to which one or two or more electrolytes composed of lithium salts, such as LiPF₆, LiBF₄, LiSbF₆, LiAsF₆, LiClO₄, LiCF₃SO₃, LiC₄F₉SO₃, LiSbF₆, LiAlO₄, LiAlCl₄, LiN(CₓF₂ₓ₊₁SO₂) (C_{y}F_{2y+1}SO₂) (where x and y are natural numbers), LiCl, and LiI, are mixed and dissolved.

The cathodes 3 and the anodes 4 are alternately laminated in the container 2, and the separators 5 that insulate the cathodes 3 and the anodes 4 are disposed between the cathodes 3 and the anodes 4.

As the cathodes 3 for the lithium secondary battery 1A, normally, known ones can be used; for example, a coating is formed of lithium-containing composite oxide such as lithium manganese oxide, lithium cobalt oxide, lithium nickel oxide, lithium-containing nickel-manganese-cobalt composite oxide, lithium iron phosphate compound, etc., used as active material; with these lithium ion storable materials, a conductive agent such as graphite, acetylene black, carbon black, etc. and a binder such as polyvinylidene difluoride, etc. are combined as needed.
As the anodes 4 for the lithium secondary battery 1A, normally, known ones can be used; for example, a coating is formed of active material such as natural graphite, artificial graphite, amorphous carbon, silicon compound, metal oxide (TiO₂, etc.) and so on; with these lithium ion storable materials, a conductive agent such as graphite, acetylene black, carbon black, etc. and a binder such as polyvinylidene difluoride, etc. are combined as needed.

The separators 5 are members formed of insulating material and are formed in shapes that surround the cathodes 3. As the separators 5 for the lithium secondary battery 1A, normally, known ones can be used; for example, polyolefin-(microporous polypropylene, polyethylene, etc.), microporous imide-, or ceramic-containing porous film, etc. can be used. In this embodiment, the separators 5 are described as applied to ones formed in shapes that surround the cathodes 3; however, they may have shapes that surround the anodes 4, and the shapes thereof are not particularly limited.

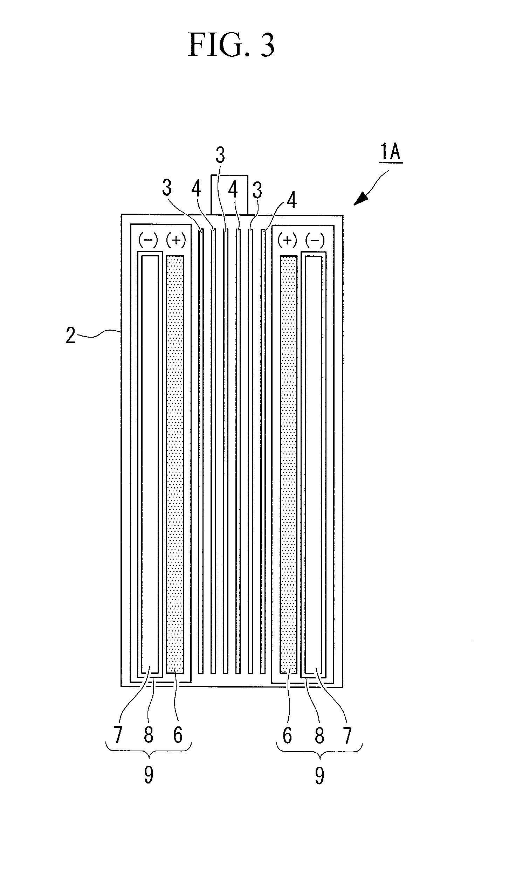

As shown in Fig. 2, the short circuit sheet assemblies 9 are laminates of the cathode sheets 6 and the anode sheets 7, and the short circuit separators 8 that insulate the cathode sheets 6 and the anode sheets 7 are disposed between the cathode sheets 6 and the anode sheets 7.
As the cathode sheets 6, a conductor such as aluminum foil, nickel foil, etc. can be used. However, when the short circuit sheet assemblies 9 are wrapped in material impermeable to the electrolyte solution, such as aluminum laminating film, as in Fig. 3, any conductor such as copper, iron, stainless steel (SUS), etc. can be used as long as the electrolyte solution is kept from entering the short circuit sheet assemblies 9.

As the anode sheets 7, a conductor such as copper foil, etc. can be used. However, when the short circuit sheet assemblies 9 are wrapped in aluminum laminating film, etc. as in Fig. 3, any conductor such as aluminum, iron, stainless steel (SUS), etc. can be used as long as the electrolyte solution is kept from entering the short circuit sheet assemblies 9.

As the separators 8, those used as the separators 5 can also be used. However, there are no particular limitations, and other insulators can be used as long as the cathode sheets 6 and the anode sheets 7 can be insulated; films made of nonporous polyethylene, polypropylene, or polyethylene terephthalate, etc. can also be used.

Furthermore, the short circuit sheet assembly 9 is disposed adjacent to one surface that is substantially perpendicular to the laminating direction of the laminated cathodes 3 and anodes 4 (left or right surface in Fig. 2, described as the laminate surface hereafter). In other words, the short circuit sheet assembly 9 is disposed between the outermost layer, that is, the container 2, and the laminated cathodes 3 and anodes 4.

The number of sets of the cathode sheets 6 and the anode sheets 7 in the short circuit sheet assembly 9 may be one or greater, and it is not particularly limited. In this embodiment the short circuit sheet assembly 9 will be described as applied to one having ten pairs.
Note that, the short circuit sheet assemblies 9 may be disposed at the outermost layer, as described above, or some layers of the cathodes 3 and the anodes 4 may be disposed between the short circuit sheet assemblies 9 and the container 2; it is not particularly limited.

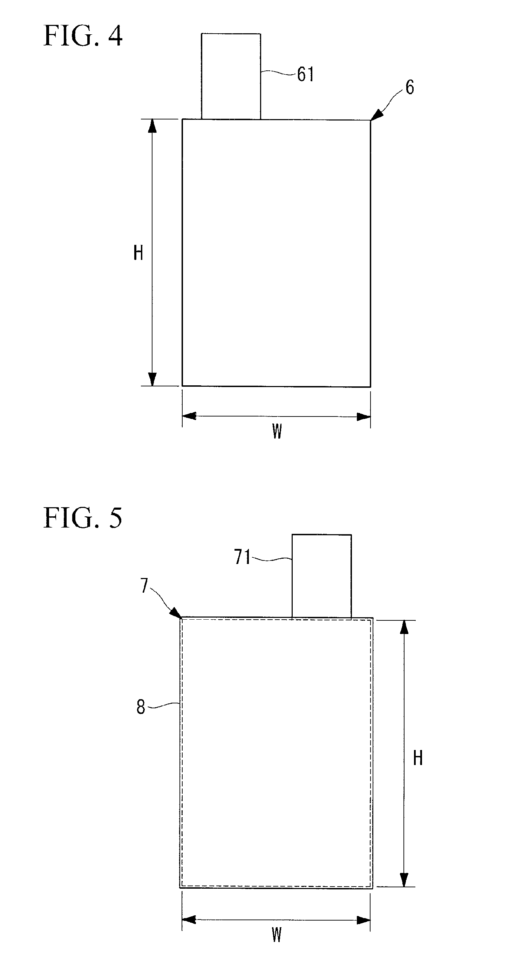

Fig. 4 is a schematic diagram for explaining the shapes of the cathode sheets in Fig. 2, and Fig. 5 is a schematic diagram for explaining the shapes of the anode sheets and the short circuit separators in Fig. 2.
The cathode sheets 6 are substantially rectangular thin films formed of aluminum foil. As shown in Fig. 4, the cathode sheets 6 are provided with a cathode connection portion 61 that connects with the cathode terminal 11. In this embodiment, the cathode sheets 6 will be described as applied to ones having a thickness of 20 µm, a height (H) of 135 mm, and a width (W) of 100 mm. Note that the cathode connection portion 61 is not included in the above dimensions.

The anode sheets 7 are substantially rectangular thin films formed of copper. As shown in Fig. 5, the anode sheets 7 are provided with an anode connection portion 71 that connects with the anode terminal 12. In this embodiment, the anode sheets 7 will be described as applied to ones having a thickness of 10 µm, a height (H) of 135 mm, and a width (W) of 100 mm. Note that the anode connection portion 71 is not included in the above dimensions.
The short circuit separators 8 are thin films formed of polyolefin and, as shown in Fig. 5, are formed like a bag that surrounds the anode sheets 7. In this embodiment, the short circuit separators 8 will be described as applied to ones having a thickness of 30 µm.

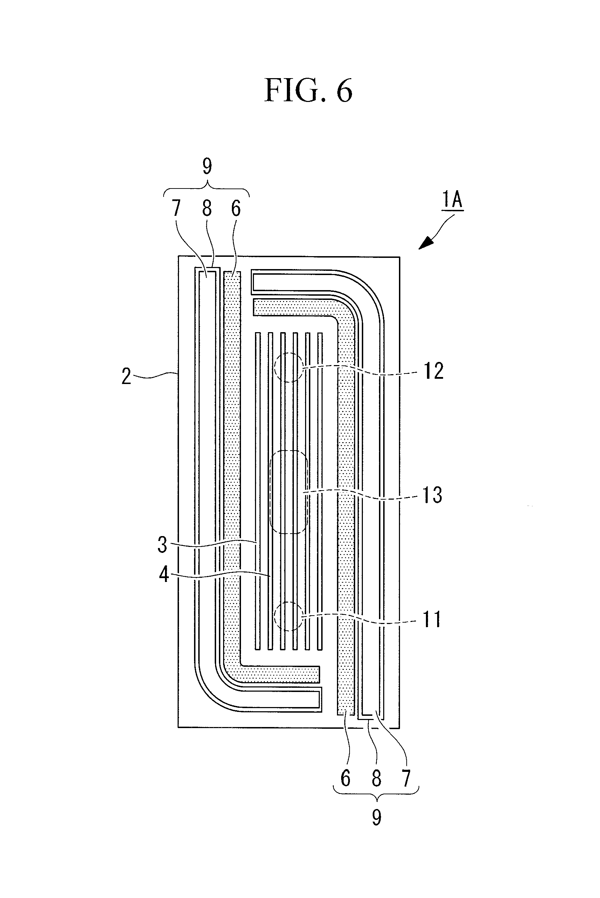

Fig. 6 is top view for explaining an example of another arrangement of the short circuit sheet assemblies in Fig. 2.
Note that the short circuit sheet assemblies 9 may be disposed adjacent only to the laminate surfaces of the laminated cathodes 3 and anodes 4, as described above; or as shown in Fig. 6, a part of the short circuit sheet assemblies 9 may be folded, and the short circuit sheet assemblies 9 may be disposed adjacent to the laminate surfaces as well as the side surfaces adjacent to the laminate surfaces; or the short circuit sheet assemblies 9 may be disposed adjacent to the laminate surfaces as well as the bottom surface adjacent to the laminate surfaces. The arrangement is not particularly limited.

By disposing them in this way, because the short circuit sheet assemblies 9 are disposed also at the side surfaces or the bottom surface adjacent to the laminate surfaces, thermal runaway in the lithium secondary battery 1A is suppressed or alleviated even if a nail 21 is driven into the side surface or the bottom surface, in comparison to the case in which the short circuit sheet assemblies 9 are disposed only at the laminate surfaces of the cathodes 3 and the anodes 4.

Effects in the case in which a nail, which is a foreign object, is driven into the lithium secondary battery 1A configured as described above will be described next.

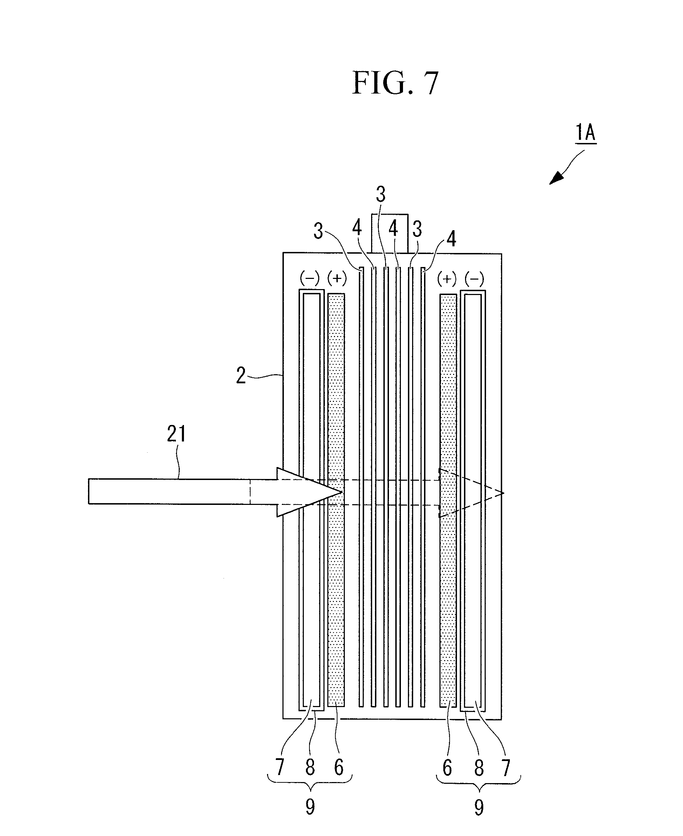

Fig. 7 is a schematic diagram for explaining a state in which a nail is driven into the lithium secondary battery 1A in Fig. 2.
As shown in Fig. 7, when the nail (foreign object) 21 is driven into the side surface of the lithium secondary battery 1A, the nail 21 first punctures the container 2, and is then driven into the short circuit sheet assembly 9. The cathode sheets 6 and the anode sheets 7 are short circuited via the nail 21 because the nail 21 punctures the short circuit separators 8. A large current flows between the cathode sheets 6 and the anode sheets 7 via the nail 21.
In the region where the large current flows, the temperature rises due to the heat generated by the electrical resistance. The generated heat is dissipated to the outside from the container 2 by heat conduction; therefore, only a part of the heat is transmitted to the cathodes 3 and the anodes 4.

If the nail 21 is subsequently driven in even deeper, the nail 21 punctures the short circuit sheet assembly 9 and is driven into the cathodes 3 and the anodes 4. Thus, the cathodes 3 and the anodes 4 are short circuited via the nail 21.
The value of the current flowing between the cathodes 3 and the anodes 4 via the nail 21 is smaller than the large current described above because the energy density of the lithium secondary battery 1A decreases due to the large current that is already flowing between the cathode sheets 6 and the anode sheets 7.
When the value of the current flowing becomes small, the amount of heat generated by the electrical resistance also becomes small; therefore, the temperature rise in the cathodes 3 and the anodes 4 also becomes small.

With the configuration described above, when the nail 21 is driven into the lithium secondary battery 1A, the nail 21 is driven into the short circuit sheet assembly 9. The cathode sheets 6 and the anode sheets 7 are short circuited via the nail 21. A large current flows between the cathode sheets 6 and the anode sheets 7 because the nail 21 has low electrical resistance, and thus heat is generated by the current. Because the short circuit sheet assemblies 9 are laminated on the outside of the alternately laminated cathodes 3 and anodes 4, the generated heat is dissipated outside without being trapped in the alternately laminated cathodes 3 and anodes 4.
Accordingly, breakdown of the cathode active material in the cathodes 3 due to the heat generated by the short circuit is suppressed, thus suppressing/alleviating thermal runaway in the lithium secondary battery 1A.

Furthermore, because the cathode sheets 6 and the anode sheets 7 short circuit before the cathodes 3 and the anodes 4 short circuit via the nail 21, causing large current to flow and decreasing the energy density, when the cathodes 3 and the anodes 4 short circuit, the value of the short circuit current flowing in the cathodes 3 and the anodes 4 becomes small. Accordingly, the amount of heat generated in the cathodes 3 and the anodes 4 due to the short circuit becomes small, and therefore, breakdown of the cathode active material in the cathodes 3 is suppressed, and thermal runaway of the lithium secondary battery 1A is suppressed.

### [Second Embodiment]

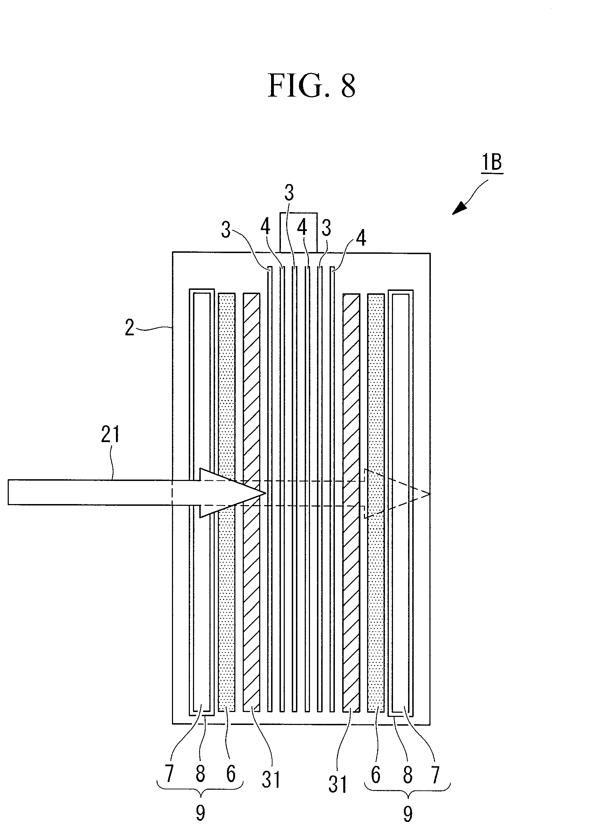

Next, a second embodiment of the present invention will be described with reference to Fig. 8.
The basic configuration of a lithium secondary battery of this embodiment is identical to that of the first embodiment; however, the configuration between the short circuit sheet assembly and laminated cathodes and anodes differs from the first embodiment. Therefore, in this embodiment, only the configuration between the short circuit sheet assembly and the laminated cathodes and anodes will be described using Fig. 8, and descriptions of other components, etc. will be omitted.
Fig. 8 is a schematic diagram for explaining the configuration of the lithium secondary battery according to this embodiment.
Note that the components identical to those of the first embodiment are given the same reference numerals, and the descriptions thereof will be omitted.

As shown in Fig. 8, a lithium secondary battery 1B is provided with a container 2, cathodes 3 that are connected to a cathode terminal 11, anodes 4 that are connected to a anode terminal 12, separators 5 that insulate the cathodes 3 and the anodes 4, short circuit sheet assemblies 9 composed of cathode sheets 6, anode sheets 7, and short circuit separators 8, and thermal insulators 31.
The thermal insulators 31 are plate-like members formed of a material with thermal insulating properties and are disposed between the laminated cathodes 3 and anodes 4 and the short circuit sheet assemblies 9.

Effects in the case in which a nail, which is a foreign object, is driven into the lithium secondary battery 1B configured as described above will be described next.
As shown in Fig. 8, when the nail 21 is driven into the side surface of the lithium secondary battery 1B, the nail 21 first punctures the container 2, and is then driven into the short circuit sheet assembly 9. A large current flows between the cathode sheets 6 and the anode sheets 7 via the nail 21.

In the region where the large current flows, temperature rises due to the heat generated by the electrical resistance. The generated heat is dissipated to the outside from the container 2 by heat conduction. With respect to the cathodes 3 and the anodes 4, the heat is less easily transmitted to the cathodes 3 and the anodes 4 because heat conduction is blocked by the thermal insulators 31.
In the case in which the nail 21 is driven in even deeper, the effects thereof are identical to those in the first embodiment, and therefore, descriptions thereof will be omitted.

In the configuration described above, because the thermal insulators 31 are provided, the heat generated by short circuiting of the cathode sheets 6 and the anode sheets 7 is less easily transmitted to the cathodes 3 and the anodes 4. Accordingly, breakdown of the cathode active material in the cathodes 3 due to heat generated by the short circuiting is suppressed, and thermal runaway of the lithium secondary battery 1B is suppressed/alleviated.

### [Third Embodiment]

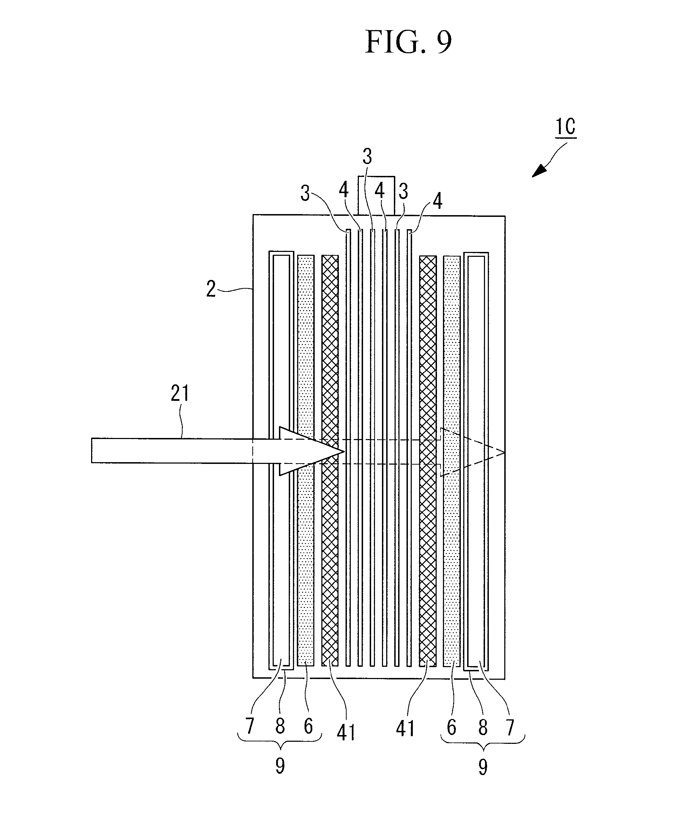

Next, a third embodiment of the present invention will be described with reference to Fig. 9.
The basic configuration of a lithium secondary battery of this embodiment is identical to that of the first embodiment; however, the configuration between the short circuit sheet assembly and laminated cathodes and anodes differs from the first embodiment. Therefore, in this embodiment, only the configuration between the short circuit sheet assembly and the laminated cathodes and anodes will be described using Fig. 9, and descriptions of other components, etc. will be omitted.
Fig. 9 is a schematic diagram for explaining the configuration of the lithium secondary battery according to this embodiment.
Note that the components identical to those of the first embodiment are given the same reference numerals, and the descriptions thereof will be omitted.

As shown in Fig. 9, a lithium secondary battery 1C is provided with a container 2, cathodes 3 that are connected to a cathode terminal 11, anodes 4 that are connected to an anode terminal 12, separators 5 that insulate the cathodes 3 and the anodes 4, short circuit sheet assemblies 9 composed of cathode sheets 6, anode sheets 7 and short circuit separators 8, and heat sink portions 41.

The heat sink portions 41 are plate-like members containing materials with heat sink properties, that is, extinguishing agent, and are disposed between the short circuit sheet assemblies 9 and the laminated cathodes 3 and anodes 4.
Examples of the extinguishing agent contained in the heat sink portions 41 include BC extinguishing agent (K type, KU type), BC extinguishing agent (Na type), ABC extinguishing agent, water or liquid (foam) extinguishing agent, hydrated metal compounds, boron compounds, phosphorous compounds, halogen compounds, etc.

Furthermore, examples of BC extinguishing agent (Na type) include sodium hydrogen carbonate, sodium carbonate, ammonium hydrogen carbonate, ammonium carbonate, etc.
Examples of ABC extinguishing agent include ammonium dihydrogen phosphate, ammonium hydrogen phosphate, ammonium phosphate, ammonium sulfate, etc.

Examples of liquid (foam) extinguishing agent include water plus surfactant (alkyl sulfate ester salts or perfluorooctanoates), ethylene glycol, etc.
Examples of hydrated metal compounds include aluminum hydroxide, magnesium hydroxide, magnesium carbonate, antimony oxide, etc. These compounds have a heat sink effect.

Examples of boron compounds include boric acid, zinc borate, etc. These compounds have a heat sink effect and an oxygen blocking effect.
Examples of phosphorous compounds include triphenyl phosphate, bisphenol-A-bis(tricresyl phosphate), tricresyl phosphate, trixylenyl phosphate, ammonium polyphosphate, etc. These compounds have an extinguishing effect by radical trapping and an oxygen blocking effect.

Examples of halogen compounds include chlorinated paraffin, decabromodiphenyl ether, etc. These compounds have an extinguishing effect by radical trapping and an oxygen blocking effect.

Note that the heat sink portions 41 may be disposed between the short circuit sheet assemblies 9 and the laminated cathodes 3 and anodes 4, as in the above-described embodiment. Alternatively, at least one of cathode sheets 6 and anode sheets 7 of the short circuit sheet assembly 9 may be coated with the above-described heat sink agent or extinguishing agent; the configuration is not particularly limited.

Effects in the case in which a nail, which is a foreign object, is driven into the lithium secondary battery 1C configured as described above will be described next.
As shown in Fig. 9, when the nail 21 is driven into the side surface of the lithium secondary battery 1C, the nail 21 first punctures the container 2, and is then driven into the short circuit sheet assembly 9. A large current flows between the cathode sheets 6 and the anode sheets 7 via the nail 21.

In the region where the large current flows, the temperature rises due to the heat generated by the electrical resistance. The generated heat is dissipated to the outside from the container 2 by heat conduction. With respect to the cathodes 3 and the anodes 4, the heat is less easily transmitted to the cathodes 3 and the anodes 4 because heat is absorbed by the heat sink portions 41.
Alternatively, even if ignition results from the generated heat, the ignition is suppressed or extinguished by the extinguishing agent contained in the heat sink portions 41.
In the case in which the nail 21 is driven in even deeper, effects thereof are identical to those in the first embodiment, and therefore, descriptions thereof will be omitted.

With the configuration described above, heat generated by the short circuiting of the cathodes sheets 6 and the anode sheets 7 is absorbed by the heat sink portions 41 and is therefore less easily transmitted to the laminated cathodes 3 and anodes 4. Accordingly, breakdown of the cathode active material in the cathodes 3 due to heat generated by the short circuiting is suppressed, and thermal runaway of the lithium secondary battery 1C is suppressed/alleviated.

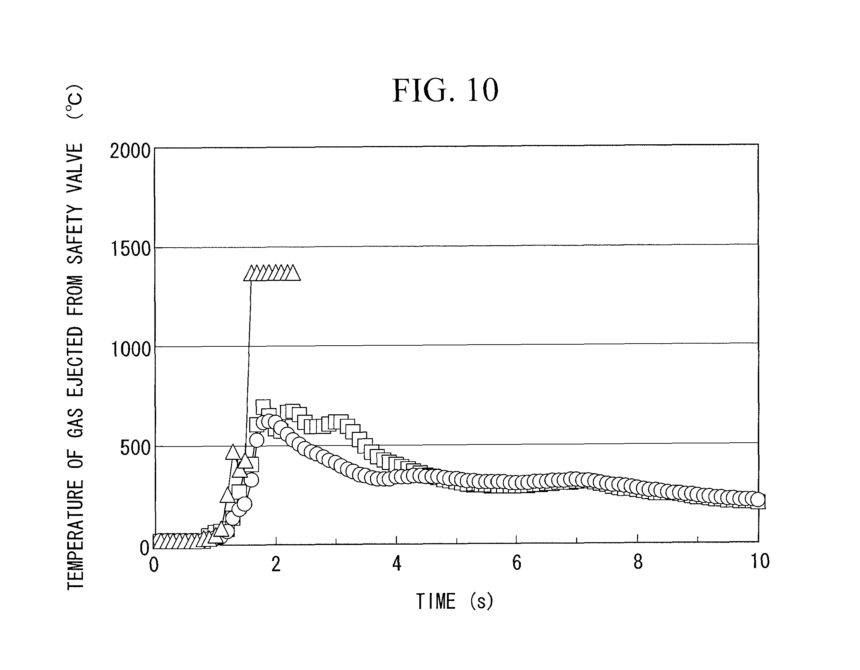

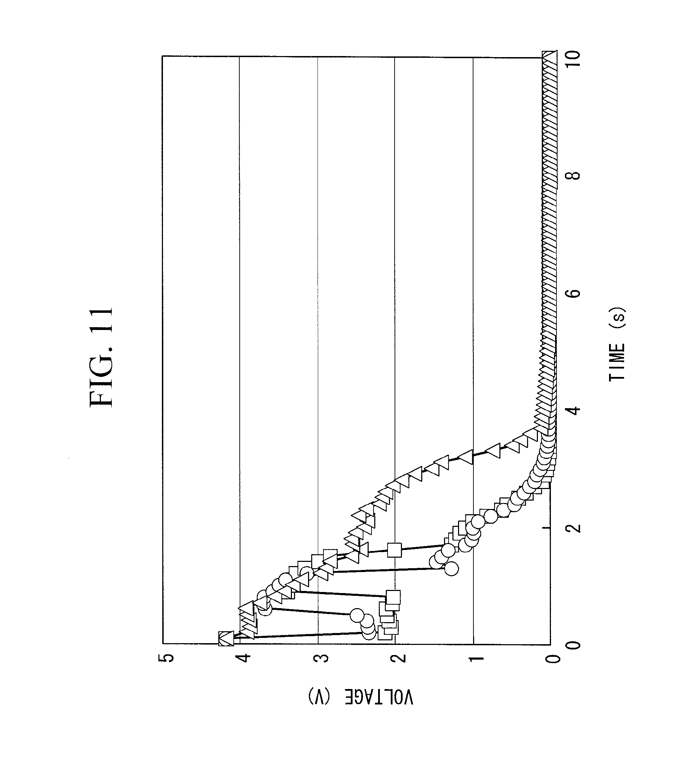

Next, results of a nail penetration test using the above-described lithium secondary batteries 1A and 1C according to the first and third embodiments and a conventional lithium secondary battery will be described using Figs. 10 and 11.
Fig. 10 is a graph showing temperature changes of gas ejected from the safety valve, and Fig. 11 is a graph showing voltage changes.
Here, the conventional lithium secondary battery 1X is one provided with a container 2, cathodes 3, anodes 4, and separators 5.

First, charging conditions of lithium batteries used in the tests will be described. Charging of the conventional lithium secondary battery 1X and the lithium secondary batteries 1A and 1C according to the first and third embodiments are all carried out under the same charging conditions.

Charging is carried out by a constant-current constant-voltage control charging system (4.20 V-CC/CV). More specifically, at the beginning of charging where the terminal voltage between the cathode terminal 11 and the anode terminal 12 is lower than 4.2 V, charging is carried out with a constant charging current. As the charging progresses and the terminal voltage of 4.2 V is reached, the charging voltage is controlled to a constant voltage of 4.2 V, and the charging current is gradually lowered.
Subsequently, the charging is terminated once the charging current is decreased to 0.5 A (termination current). This charging is carried out with a 5-hour-rate current value of C/5, and the temperature of the surroundings is about 25 °C.

Next, conditions for the nail penetration test will be described.
This nail penetration test is conducted by completely penetrating a lithium secondary battery with a nail 21 having a diameter of about 5 mm. The position of the complete penetration by the nail 21 is the central portion of the cathodes 3 and the anodes 4.
Temperature measurements and terminal voltage measurements for the gas ejected from the safety valve 13 are measured, with 0 second (s) set immediately after the nail 21 is driven into the lithium secondary battery.

First, changes in temperature of gas ejected from the safety valve 13 will be described referring to Fig. 10. In Fig. 10, the temperatures of gas ejected from a conventional lithium secondary battery 1X are shown with open triangles (Δ), the temperatures of gas ejected from the lithium secondary battery 1A according to the first embodiment are shown with open squares (□), and the temperatures of gas ejected from the lithium secondary battery 1C according to the third embodiment are shown with open circles (○).

The ejection of gas from the safety valve 13 begins about 1 s after the nail 21 is driven into the conventional lithium secondary battery 1X. The temperature of the gas exceeds the upper limit of the measurement instrument (about 1300°C) at about 1.5 seconds, indicating the occurrence of thermal runaway. In this case, ignition may possibly result from the high temperature, depending on the materials used in the lithium secondary battery 1X.

Similar to the conventional lithium secondary battery 1X, the ejection of gas from the safety valve 13 begins about 1 second after the nail 21 is driven into the lithium secondary battery 1A according to the first embodiment. The temperature of the gas reaches a maximum of about 700°C after about 2 seconds and, subsequently, the temperature of the gas decreases with time as shown.

Similar to the conventional lithium secondary battery 1X, the ejection of gas from the safety valve 13 begins about 1 second after the nail 21 is driven into the lithium secondary battery 1C according to the third embodiment. The temperature of the gas reaches a maximum of about 600°C after about 2 seconds and, subsequently, the temperature of the gas decreases with time as shown.

That is, in the cases of the lithium secondary batteries 1A and 1C of the first and the third embodiments, it is shown that, even if the nail 21 is driven in causing a short circuit, thermal runaway inside the batteries is alleviated as compared to the conventional lithium secondary battery 1X.

Next, changes in terminal voltage between the cathodes 3 and anodes 4 will be described referring to Fig. 11. In Fig. 11, as in Fig. 10, the terminal voltages of a conventional lithium secondary battery 1X are shown with open triangles (Δ), the terminal voltages of the lithium secondary battery 1A according to the first embodiment are shown with open squares (□), and the terminal voltages of the lithium secondary battery 1C according to the third embodiment are shown with open circles (○).

When the nail 21 is driven into the conventional lithium secondary battery 1X, for a period of about 4 seconds immediately thereafter, the terminal voltage smoothly decreases from about 4.2 V to 0 V.
This is considered to result from a gradual decrease in the energy density of the lithium secondary battery 1X due to the flow of the short circuit current caused by the nail 21 driven into it.

When the nail 21 is driven into the lithium secondary battery 1A according to the first embodiment, the terminal voltage drops to about 2 V immediately thereafter. After continuing with a terminal voltage of about 2 V for about 1 second, the terminal voltage subsequently rises to about 3 V between about 1 second and about 1.5 seconds. This voltage is the same voltage as the terminal voltage for the conventional lithium secondary battery 1X described above.
Once about 1.5 seconds passes, the terminal voltage decreases to about 1.2 V. Then, the terminal voltage smoothly decreases from about 1.2 V to 0 V between about 1.5 seconds and about 3 seconds.

That the terminal voltage decreases first to about 2 V can be considered to be a result of the short circuit in the short circuit sheet assembly 9. That the terminal voltage subsequently increases to about 3 V can be considered to be a result of the nail 21 reaching the cathodes 3 and the anodes 4, bringing about the same phenomenon as in the conventional lithium secondary battery 1X. Furthermore, that the terminal voltage drops to about 1.2 V and smoothly decreases to 0 V is considered to be a result of the nail 21 completely penetrating the cathodes 3 and the anodes 4, driving into the short circuit sheet assembly 9 on the other side, and generating a short circuit again in the short circuit sheet assembly 9.

When the nail 21 is driven into the lithium secondary battery 1C according to the third embodiment, the terminal voltage decreases to about 2.3 V immediately thereafter.
After continuing with a terminal voltage of about 2.3 V for about 0.5 seconds, the terminal voltage subsequently increases to 3.5 V between about 0.5 seconds and about 1 second. This voltage is the same voltage as the terminal voltage in the conventional lithium secondary battery 1X described above.
After about 1 second passes, the terminal voltage decreases to about 1.5 V. Then, the terminal voltage smoothly decreases from about 1.5 V to 0 V between about 1 second and about 3.5 seconds.

Changes in the terminal voltage in the lithium secondary battery 1C according to the third embodiment are considered to be a result of effects substantially identical to those of the changes in terminal voltage in the lithium secondary battery 1A according to the first embodiment.

## Claims

1. A lithium secondary battery comprising:
cathodes having cathode active material that stores and discharges lithium ions,
anodes that store and discharge lithium ions, and
a dummy laminated body in which dummy cathodes connected to a cathode terminal and dummy anodes connected to an anode terminal are alternately laminated and that has an insulator to insulate the dummy cathodes and the dummy anodes,
wherein the dummy laminated body is laminated on the outside of the alternately laminated cathodes and anodes.

2. The lithium secondary battery according to Claim 1, wherein a part of the dummy laminated body is folded, and the folded dummy laminated body is disposed adjacent to one surface that is substantially perpendicular to the laminating direction of the cathodes and the anodes and another surface that is adjacent to the one surface.

3. The lithium secondary battery according to Claim 1, wherein thermal insulators for blocking the transmission of heat are provided between the dummy laminated body and the laminated cathodes and anodes.

4. The lithium secondary battery according to Claim 1, wherein heat sink portions for absorbing heat are provided between the dummy laminated body and the laminated cathodes and anodes.
